(19) Europäisches Patentamt
European Patent Office
Office européen des brevets

(11) EP 2 008 837 A1

# (12) EUROPEAN PATENT APPLICATION

published in accordance with Art. 153(4) EPC

(43) Date of publication:
**31.12.2008 Bulletin 2009/01**

(21) Application number: **07740866.4**

(22) Date of filing: **03.04.2007**

(51) Int Cl.:
***B60C 9/04*** *(2006.01)* ***B60C 9/00*** *(2006.01)*
***B60C 9/20*** *(2006.01)* ***B60C 9/22*** *(2006.01)*

(86) International application number:
**PCT/JP2007/057430**

(87) International publication number:
**WO 2007/122984 (01.11.2007 Gazette 2007/44)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **17.04.2006 JP 2006113255**

(71) Applicant: **Bridgestone Corporation**
**Tokyo 104-0031 (JP)**

(72) Inventor: **ZUIGYO, Yugo**
**Kodaira-shi, Tokyo 187-0031 (JP)**

(74) Representative: **Whalley, Kevin**
**Marks & Clerk**
**90 Long Acre**
**London WC2E 9RA (GB)**

## (54) PNEUMATIC TIRE

(57) A pneumatic tire having high uniformity is provided by using a high-strength and high-modulus polyketone fiber cord to form a high-performance and high-quality cord fabric as a reinforcing cord in a carcass layer, a belt layer, or a belt protection layer and applying the cord fabric to the carcass layer, the belt layer, or the belt protection layer.

A cord of the carcass layer contains at least 50% by mass polyketone fiber and has a maximum thermal shrinkage stress in the range of 0.1 to 1.8 cN/dtex. Weft cords within the tire substantially orthogonal to the carcass ply cord have a fineness in the range of 60 to 600 dtex, a tensile force in the range of 100 to 2000 g, and an elongation at break in the range of 3% to 30%. The distance between the weft cords substantially parallel to each other ranges from 5 to 50 mm.

Fig.1

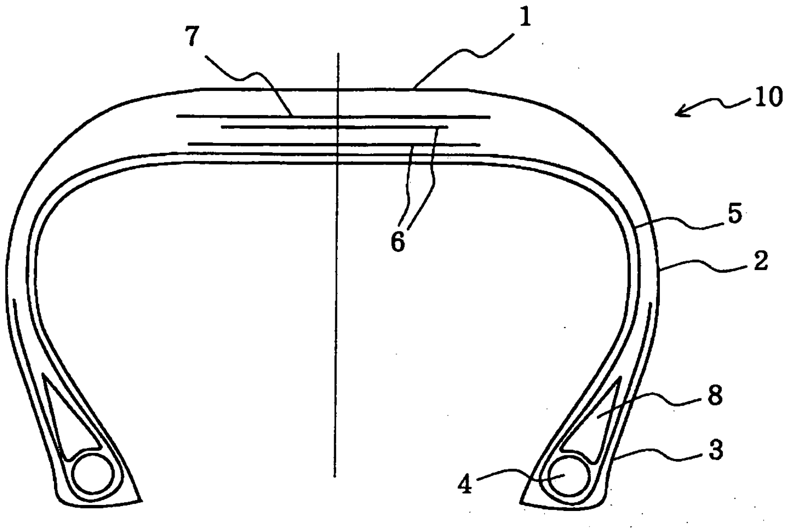


EP 2 008 837 A1

## Description

### Technical Field

The present invention relates to a pneumatic tire (hereinafter also referred to simply as a "tire") and, more particularly, to a pneumatic tire that, even when a cord fabric that includes high-strength and high-modulus polyketone fiber cords as the warp is used as a reinforcing cord in a carcass layer, a belt layer, or a belt protection layer, has less frequent disarrangement of the reinforcing cord during a heating process in tire manufacture and has high uniformity.

### Background Art

It has been found that, as a material replacing conventional organic fiber materials, an aliphatic polyketone can be obtained as a substantially complete alternating carbon monoxide-olefin copolymer through the polymerization of carbon monoxide and an olefin, such as ethylene or propene, in the presence of a catalyst, such as palladium or nickel (Non-patent Document 1). Studies have been performed to manufacture fibers from such a polyketone.

A polyketone fiber is known to have a higher melting point, higher strength, and higher modulus than conventional polyolefin fibers. Owing to these excellent physical properties, the polyketone fiber is expected to be used widely as an industrial material, in particular as a reinforcing material for rubber products, such as tires, belts, and hoses. Also in this respect, various techniques using the polyketone fiber have been proposed.

For example, Patent Documents 1 to 9 disclose techniques regarding a high-strength and high-modulus polyketone fiber. However, these Patent Documents do not disclose that a cord fabric formed of the polyketone fiber is used as a reinforcing material for rubber products.

In general, when a fiber cord reinforcing material is used as a reinforcing material for rubber products, fibers are twined and bonded to form a cord or cord fabric, which is embedded in a rubber material, such as a tire. In this respect, Patent Documents 10 to 17 disclose techniques regarding a cord fabric using polyketone fiber cords as the warp.

Patent Document 1: Japanese Unexamined Patent Application Publication No. 1-124617
Patent Document 2: Japanese Unexamined Patent Application Publication No. 2-112413
Patent Document 3: Japanese Unexamined Patent Application Publication (Translation of PCT Application) No. 4-505344
Patent Document 4: Japanese Unexamined Patent Application Publication No. 4-228613
Patent Document 5: Japanese Unexamined Patent Application Publication (Translation of PCT Application) No. 7-508317
Patent Document 6: Japanese Unexamined Patent Application Publication (Translation of PCT Application) No. 8-507328
Patent Document 7: U.S. patent No. 5955019
Patent Document 8: International Publication WO99/18143
Patent Document 9: International Publication WO00/09611
Patent Document 10: Japanese Unexamined Patent Application Publication No. 9-324377
Patent Document 11: Japanese Unexamined Patent Application Publication No. 9-329198
Patent Document 12: Japanese Unexamined Patent Application Publication No. 11-334313
Patent Document 13: Japanese Unexamined Patent Application Publication No. 11-336957
Patent Document 14: Japanese Unexamined Patent Application Publication No. 2000-142024
Patent Document 15: Japanese Unexamined Patent Application Publication No. 2000-142025
Patent Document 16: Japanese Unexamined Patent Application Publication No. 2000-190705
Patent Document 17: Japanese Unexamined Patent Application Publication No. 2000-264012
Non-patent Document 1: Kogyo Zairyo (industrial material) (No.December, p. 5, 1997)

### Disclosure of Invention

### Problems to be Solved by the Invention

However, a cord fabric that includes, as the warp, polyketone fiber cords disclosed in the related art was found to have the following problems (a) and (b).

(a) Because a high-strength and high-modulus polyketone fiber cord has a high thermal shrinkage stress, a cord fabric after weaving is distorted by thermal shrinkage and is not flat.
(b) After a high-strength and high-modulus polyketone fiber cord is coated with rubber to form a cord fabric, disarrangement of cords resulting from the shrinkage of polyketone fiber due to heating in tire manufacture lowers the tire uniformity.

There is no description or suggestion regarding these problems in the related art, never mind description of means for solving these problems, that is, using a high-strength and high-modulus polyketone fiber cord to form a high-performance and high-quality cord fabric as a reinforcing cord for tires.

It is an object of the present invention to provide a pneumatic tire having high uniformity by using a high-strength and high-modulus polyketone fiber cord to form a high-performance and high-quality cord fabric as a reinforcing cord in a carcass layer, a belt layer, or a belt protection layer and applying the cord fabric to the carcass layer, the belt layer, or the belt protection layer.

Means for Solving the Problems

As a result of extensive research to solve the above-mentioned problems, the present inventor completed the present invention by finding that the object can be achieved by applying the weft that satisfies the predetermined conditions in a carcass layer, a belt layer, or a belt protection layer to the warp of a high-strength and high-modulus polyketone fiber cord.

A pneumatic tire according to one aspect of the present invention includes a tread; a pair of sidewalls extending radially inwardly from both ends of the tread; a pair of beads disposed at inward ends of the sidewalls; a carcass layer formed of at least one carcass ply toroidally extending between a pair of bead cores disposed in the beads; and a belt layer formed of at least one belt ply disposed radially outwardly from the carcass at the crown of the carcass,
wherein at least one carcass ply cord of the carcass layer contains at least 50% by mass polyketone fiber and has a maximum thermal shrinkage stress in the range of 0.1 to 1.8 cN/dtex, weft cords within the tire substantially orthogonal to the carcass ply cord have a fineness in the range of 60 to 600 dtex, a tensile force in the range of 100 to 2000 g, and an elongation at break in the range of 3% to 30%, and the distance between the weft cords substantially parallel to each other ranges from 5 to 50 mm.

A pneumatic tire according to another aspect of the present invention includes a tread; a pair of sidewalls extending radially inwardly from both ends of the tread; a pair of beads disposed at inward ends of the sidewalls; a carcass layer formed of at least one carcass ply toroidally extending between a pair of bead cores disposed in the beads; and a belt layer formed of at least one belt ply disposed radially outwardly from the carcass at the crown of the carcass, wherein at least one belt ply cord of the belt layer contains at least 50% by mass polyketone fiber and has a maximum thermal shrinkage stress in the range of 0.1 to 1.8 cN/dtex, weft cords within the tire substantially orthogonal to the belt ply cord have a fineness in the range of 200 to 1000 dtex, a tensile force in the range of 200 to 3000 g, and an elongation at break in the range of 3% to 30%, and the distance between the weft cords substantially parallel to each other ranges from 5 to 50 mm.

A pneumatic tire according to still another aspect of the present invention includes a tread; a pair of sidewalls extending radially inwardly from both ends of the tread; a pair of beads disposed at inward ends of the sidewalls; a carcass layer formed of at least one carcass ply toroidally extending between a pair of bead cores disposed in the beads; a belt layer formed of at least one belt ply disposed radially outwardly from the carcass at the crown of the carcass; and at least one belt protection layer disposed radially outwardly from the belt layer,
wherein a fiber cord that forms the belt protection layer contains at least 50% by mass polyketone fiber and has a maximum thermal shrinkage stress in the range of 0.1 to 1.8 cN/dtex, weft cords within the tire substantially orthogonal to the fiber cord in the belt protection layer have a fineness in the range of 60 to 600 dtex, a tensile force in the range of 100 to 1200 g, and an elongation at break in the range of 3% to 20%, and the distance between the weft cords substantially parallel to each other ranges from 5 to 50 mm.

In a pneumatic tire according to the present invention, the polyketone fiber preferably has a tensile strength of at least 10 cN/dtex, a modulus of elasticity of at least 200 cN/dtex, and a thermal shrinkage in the range of 1% to 5% in a 150°C x 30 min dry-heat treatment.

In the present invention, the weft cords may be formed of multifilament yarn, monofilament yarn, or spun yarn, or a mixture thereof. The weft cords may suitably be formed of Polynosic, rayon, cotton, polyester, nylon, lyocell, or vinylon.

Advantages

The present invention can provide a pneumatic tire having high uniformity by using a high-strength and high-modulus polyketone fiber cord to form a high-performance and high-quality cord fabric as a reinforcing cord in a carcass layer, a belt layer, or a belt protection layer and applying the cord fabric as a reinforcing cord to the carcass layer, the belt layer, or the belt protection layer.

Brief Description of Drawings

[Fig. 1] Fig. 1 is a transverse cross-sectional view of a pneumatic tire according to one embodiment of the present invention.

Reference Numerals

1 tread
2 sidewall
3 bead
4 bead core
5 carcass layer
6 belt layer
7 belt protection layer
8 bead filler
10 pneumatic tire

Best Modes for Carrying Out the Invention

Specific embodiments of the present invention will be described in detail below.

FIRST EMBODIMENT

Fig. 1 is a schematic cross-sectional view of a pneumatic tire according to a first embodiment of the present invention. A tire 10 according to the present invention includes a tread 1, a pair of sidewalls 2 extending radially inwardly from both ends of the tread 1, a pair of beads 3 disposed at inward ends of the sidewalls, and a carcass layer 5 formed of at least one carcass ply (one carcass ply in Fig. 1) toroidally extending between a pair of bead cores 4 disposed in the beads 3. Reference numeral 8 denotes bead fillers. The tire 10 further includes a belt layer 6 formed of at least one belt ply (two belt plies in Fig. 1) disposed radially outwardly from the carcass layer 5 at the crown of the carcass layer 5 and at least one belt protection layer 7 (one protection layer in Fig. 1) disposed radially outwardly from the belt layer 6.

It is important in the present embodiment that a carcass ply cord of the carcass layer 5 in the tire 10 contains at least 50% by mass polyketone fiber and has a maximum thermal shrinkage stress in the range of 0.1 to 1.8 cN/dtex, weft cords within the tire 10 substantially orthogonal to the carcass ply cord have a fineness in the range of 60 to 600 dtex, a tensile force in the range of 100 to 2000 g, and an elongation at break in the range of 3% to 30%, and the distance between the weft cords substantially parallel to each other ranges from 5 to 50 mm. This results in the formation of a high-performance and high-quality cord fabric as a reinforcing cord of the carcass layer. A pneumatic tire including this cord fabric in the carcass layer has high uniformity.

While the tire 10 illustrated in Fig. 1 includes the belt protection layer 7, the belt protection layer 7 in the present embodiment is optional and may be omitted.

It is desirable that the carcass ply cord of the carcass layer 5 contain at least 50% by mass, preferably at least 70% by mass, and more preferably 100% by mass polyketone fiber. Below 50% by mass polyketone fiber, a tire has an insufficient strength, heat resistance, or adhesion to rubber.

It is desirable that the maximum thermal shrinkage stress of the carcass ply cord range from 0.1 to 1.8 cN/dtex, preferably from 0.4 to 1.6 cN/dtex, and more preferably from 0.6 to 1.4 cN/dtex. A maximum thermal shrinkage stress below 0.1 cN/dtex results in a great reduction in paralleling efficiency due to heating in tire manufacture, leading to insufficient tire strength. On the other hand, a maximum thermal shrinkage stress above 1.8 cN/dtex may result in a large shrinkage of the cord due to heating in tire manufacture, leading to deterioration in final tire shape.

A polyketone fiber in the carcass ply cord has a tensile strength of preferably at least 10 cN/dtex and more preferably at least 15 cN/dtex. A tensile strength below 10 cN/dtex results in insufficient tire strength.

The polyketone fiber in the carcass ply cord has a modulus of elasticity of preferably at least 200 cN/dtex and more preferably at least 250 cN/dtex. A modulus of elasticity below 200 cN/dtex results in insufficient shape retention of a tire.

The polyketone fiber in the carcass ply cord has a thermal shrinkage in the range preferably of 1% to 5% and more preferably of 2% to 4% in 150°C x 30 min dry-heat treatment. A thermal shrinkage below 1% in 150°C x 30 min

dry-heat treatment results in a great reduction in paralleling efficiency due to heating in tire manufacture, leading to insufficient tire strength. On the other hand, a thermal shrinkage above 5% in 150°C x 30 min dry-heat treatment may result in a large shrinkage of the cord due to heating in tire manufacture, leading to deterioration in final tire shape.

It is desirable that the weft cords within the tire substantially orthogonal to the carcass ply cord have a fineness in the range of 60 to 600 dtex, preferably 100 to 400 dtex. The use of a weft cord having a fineness below 60 dtex may often cause the weft cord to be broken in processes in cord fabric manufacture through tire manufacture. On the other hand, the weft cords having a fineness above 600 dtex may not be broken uniformly in an expansion process in tire manufacture, thus increasing the degree of disarrangement of carcass cords.

It is desirable that the weft cords have a tensile force in the range of 100 to 2000 g, preferably 200 to 1500 g, and more preferably 300 to 1500 g. The use of a weft cord having a tensile force below 100 g may often cause the weft cord to be broken in processes in cord fabric manufacture through tire manufacture. On the other hand, the weft cords having a tensile force above 2000 g may not be broken uniformly in an expansion process in tire manufacture, thus increasing the degree of disarrangement of carcass cords.

It is desirable that the weft cords have an elongation at break of 3% to 30%, preferably 5% to 15%. The use of a weft cord having an elongation at break below 3% may often cause the weft cord to be broken in processes in cord fabric manufacture through tire manufacture. On the other hand, the weft cords having an elongation at break above 30% may not be broken uniformly in an expansion process in tire manufacture, thus increasing the degree of disarrangement of carcass cords.

It is also desirable that the distance between the weft cords substantially parallel to each other range from 5 to 50 mm and preferably from 20 to 35 mm. At a distance below 5 mm, the productivity of cord fabric decreases. On the other hand, at a distance above 50 mm, the cord fabric has poor characteristics.

SECOND EMBODIMENT

It is important in the second embodiment that at least one belt ply cord of a belt layer 6 in a tire 10 illustrated in Fig. 1 contains at least 50% by mass polyketone fiber and has a maximum thermal shrinkage stress in the range of 0.1 to 1.8 cN/dtex, weft cords within the tire 10 substantially orthogonal to the belt ply cord have a fineness in the range of 200 to 1000 dtex, a tensile force in the range of 200 to 3000 g, and an elongation at break in the range of 3% to 30%, and the distance between the weft cords substantially parallel to each other ranges from 5 to 50 mm. This results in the formation of a high-performance and high-quality cord fabric as a reinforcing cord of the belt layer 6. A pneumatic tire including this cord fabric in the carcass layer has high uniformity.

Te belt protection layer 7 in the second embodiment is also optional and may be omitted.

It is desirable that the belt ply cord of the belt layer 6 contain at least 50% by mass, preferably at least 70% by mass, and more preferably 100% by mass polyketone fiber. Below 50% by mass polyketone fiber, a tire has an insufficient strength, heat resistance, or adhesion to rubber.

It is desirable that the maximum thermal shrinkage stress of the belt ply cord range from 0.1 to 1.8 cN/dtex, preferably from 0.4 to 1.6 cN/dtex, and more preferably from 0.6 to 1.4 cN/dtex. A maximum thermal shrinkage stress below 0.1 cN/dtex results in a great reduction in paralleling efficiency due to heating in tire manufacture, leading to insufficient tire strength. On the other hand, a maximum thermal shrinkage stress above 1.8 cN/dtex may result in a large shrinkage of the cord due to heating in tire manufacture, leading to deterioration in final tire shape.

A polyketone fiber in the belt ply cord has a tensile strength of preferably at least 10 cN/dtex and more preferably at least 15 cN/dtex. A tensile strength below 10 cN/dtex results in insufficient tire strength.

The polyketone fiber in the belt ply cord has a modulus of elasticity of preferably at least 200 cN/dtex and more preferably at least 250 cN/dtex. A modulus of elasticity below 200 cN/dtex results in insufficient shape retention of the tire.

The polyketone fiber in the belt ply cord has a thermal shrinkage in the range preferably of 1% to 5% and more preferably of 2% to 4% in 150°C x 30 min dry-heat treatment. A thermal shrinkage below 1% in 150°C x 30 min dry-heat treatment results in a great reduction in paralleling efficiency due to heating in tire manufacture, leading to insufficient tire strength. On the other hand, a thermal shrinkage above 5% in 150°C x 30 min dry-heat treatment may result in a large shrinkage of the cord due to heating in tire manufacture, leading to deterioration in final tire shape.

It is desirable that the weft cords within the tire substantially orthogonal to the belt ply cord have a fineness in the range of 200 to 1000 dtex, preferably 400 to 600 dtex. The use of a weft cord having a fineness below 200 dtex may often cause the weft cord to be broken in processes in cord fabric manufacture through tire manufacture. On the other hand, the weft cords having a fineness above 1000 dtex may result in disarrangement of the belt ply cord in a cutting process of the weft cords in tire manufacture.

It is desirable that the weft cords have a tensile force in the range of 200 to 3000 g, preferably 400 to 1400 g, and more preferably 600 to 1200 g. The use of a weft cord having a tensile force below 200 g may often cause the weft cord to be broken in cord fabric manufacture through a dipping process. On the other hand, the weft cords having a tensile force above 3000 g may result in disarrangement of the belt ply cord in a cutting process of the weft cords in tire

manufacture.

It is desirable that the weft cords have an elongation at break of 3% to 30%, preferably 5% to 10%. The use of a weft cord having an elongation at break below 3% may often cause the weft cord to be broken in cord fabric manufacture through a dipping process. On the other hand, the weft cords having an elongation at break above 30% may result in disarrangement of the belt ply cord in a cutting process of the weft cords in tire manufacture.

It is also desirable that the distance between the weft cords substantially parallel to each other range from 5 to 50 mm and preferably from 20 to 35 mm. At a distance below 5 mm, the productivity of cord fabric decreases. On the other hand, at a distance above 50 mm, the cord fabric has poor characteristics.

THIRD EMBODIMENT

In the third embodiment, a belt protection layer 7 is necessary. The belt protection layer 7 is a cord/rubber protection layer disposed on a belt layer 6. The belt protection layer 7 increases the stiffness of the belt and thereby improves high-speed durability and steering stability and reduces road noise, thus being used as means for controlling the tire performance. While the belt protection layer 7 is a single layer in Fig. 1, it may be formed of two or more layers or may be disposed only on the ends of the belt.

It is important in the third embodiment that a fiber cord of a belt protection layer 7 in a tire 10 illustrated in Fig. 1 contains at least 50% by mass polyketone fiber and has a maximum thermal shrinkage stress in the range of 0.1 to 1.8 cN/dtex, weft cords within the tire substantially orthogonal to the fiber cord in the belt protection layer have a fineness in the range of 60 to 600 dtex, a tensile force in the range of 100 to 1200 g, and an elongation at break in the range of 3% to 20%, and the distance between the weft cords substantially parallel to each other ranges from 5 to 50 mm. This results in the formation of a high-performance and high-quality cord fabric as a reinforcing cord of the belt protection layer 7. A pneumatic tire including this cord fabric in the carcass layer has high uniformity.

It is desirable that the fiber cord in the belt protection layer contain at least 50% by mass, preferably at least 70% by mass, and more preferably 100% by mass polyketone fiber. Below 50% by mass polyketone fiber, a tire has an insufficient strength, heat resistance, or adhesion to rubber.

It is desirable that the maximum thermal shrinkage stress of the fiber cord in the belt protection layer range from 0.1 to 1.8 cN/dtex, preferably from 0.4 to 1.6 cN/dtex, and more preferably from 0.6 to 1.4 cN/dtex. A maximum thermal shrinkage stress below 0.1 cN/dtex results in a great reduction in paralleling efficiency due to heating in tire manufacture, leading to an insufficient function of the belt protection layer. On the other hand, a maximum thermal shrinkage stress above 1.8 cN/dtex may result in a large shrinkage of the cord due to heating in tire manufacture, leading to deterioration in final tire shape.

A polyketone fiber in the fiber cord in the belt protection layer has a tensile strength of preferably at least 10 cN/dtex and more preferably at least 15 cN/dtex. A tensile strength below 10 cN/dtex results in insufficient tire strength.

The polyketone fiber in the fiber cord in the belt protection layer has a modulus of elasticity of preferably at least 200 cN/dtex and more preferably at least 250 cN/dtex. A modulus of elasticity below 200 cN/dtex results in insufficient shape retention of the tire.

The polyketone fiber in the fiber cord in the belt protection layer has a thermal shrinkage in the range preferably of 1% to 5% and more preferably of 2% to 4% in 150°C x 30 min dry-heat treatment. A thermal shrinkage below 1% in 150°C x 30 min dry-heat treatment results in a great reduction in paralleling efficiency due to heating in tire manufacture, leading to insufficient tire strength. On the other hand, a thermal shrinkage above 5% in 150°C x 30 min dry-heat treatment may result in a large shrinkage of the cord due to heating in tire manufacture, leading to deterioration in final tire shape.

It is desirable that the weft cords within the tire substantially orthogonal to the fiber cord in the belt protection layer have a fineness in the range of 60 to 600 dtex, preferably 100 to 400 dtex. The use of a weft cord having a fineness below 60 dtex may often cause the weft cord to be broken in processes in cord fabric manufacture through tire manufacture. On the other hand, the weft cords having a fineness above 600 dtex may result in disarrangement of the fiber cord in a cutting process of the weft cords in tire manufacture.

It is desirable that the weft cords have a tensile force in the range of 100 to 1200 g, preferably 200 to 1000 g, and more preferably 300 to 800 g. The use of a weft cord having a tensile force below 100 g may often cause the weft cord to be broken in cord fabric manufacture through a dipping process. On the other hand, the weft cords having a tensile force above 1200 g may result in disarrangement of the fiber cord in a cutting process of the weft cords in tire manufacture.

It is desirable that the weft cords have an elongation at break of 3% to 20%, preferably 5% to 15%. The use of a weft cord having an elongation at break below 3% may often cause the weft cord to be broken in cord fabric manufacture through a dipping process. On the other hand, the weft cords having an elongation at break above 20% may result in disarrangement of the fiber cord in a cutting process of the weft cords in tire manufacture.

It is also desirable that the distance between the weft cords substantially parallel to each other range from 5 to 50 mm and preferably from 20 to 35 mm. At a distance below 5 mm, the productivity of cord fabric decreases. On the

other hand, at a distance above 50 mm, the cord fabric has poor characteristics.

As a matter of course, the present invention also includes tires in accordance with combinations of the first to third embodiments. In the present invention, the weft cords may be formed of multifilament yarn, monofilament yarn, or spun yarn, or a mixture thereof. The weft cords may suitably be formed of Polynosic, rayon, cotton, polyester, nylon, lyocell, or vinylon.

Polyketone fiber (hereinafter referred to as "PK fiber") for use in the present invention will be described below in detail.

In the present invention, examples of fibers other than the PK fiber in fiber yarn containing at least 50% by mass PK fiber include, but not limited to, nylon, ester, rayon, Polynosic, lyocell, and vinylon.

The dry-heat shrinkage of the PK fiber in the present invention is calculated according to the following equation from the fiber lengths measured under a load of 1/30 (cN/dtex) before and after dry-heat treatment in an oven at 150°C for 30 min.

$$\text{Dry-heat shrinkage (\%)} = (Lb - La)/Lb \times 100$$

Lb and La denote the fiber lengths measured before and after the heat treatment, respectively. The tensile strength and the modulus of elasticity in tension of the PK fiber are measured in conformity with JIS-L-1013. The modulus of elasticity in tension is an initial modulus of elasticity calculated from the loads at an elongation of 0.1% and 0.2%.

Suitable example of a PK fiber cord for use in the present invention is a multifilament twisted PK fiber having a total decitex in the range of 3000 to 17000 decitex per cord. A cord having a total decitex in the range of 3000 to 17000 decitex per cord is stiff and has a smaller weight than steel cords, which is an advantage of organic fibers. A cord having a total decitex below 3000 decitex cannot have sufficient stiffness as a carcass ply 3. On the other hand, a cord having a total decitex above 17000 decitex has an increased thickness of the ply, resulting in an increase in the weight of a tire.

The maximum thermal shrinkage stress of the PK fiber cord is the maximum stress (unit: cN/dtex) placed on a PK fiber cord sample 25 cm in length at 177°C after a common dipping treatment and before vulcanization while the sample is heated at a heating rate of 5°C/min.

Preferably, the PK fiber cord has a twist coefficient $\alpha$, as defined by the following equation (I), in the range of 850 to 4000.

$$\alpha = T \times D^{1/2} \qquad (I)$$

wherein T denotes the number of twists (times/100 mm), and D denotes the total fineness (dtex) of the cord. The twist coefficient $\alpha$ of the PK fiber cord below 850 results in an insufficient thermal shrinkage stress. On the other hand, the twist coefficient $\alpha$ above 4000 results in an insufficient modulus of elasticity, leading to poor reinforcing ability.

A suitable raw material polyketone of the PK fiber cord is substantially composed of a constitutional repeating unit having the following general formula (II). Among others, preferably at least 97% by mole, more preferably at least 99% by mole, and most preferably 100% by mole of the constitutional repeating unit of polyketone is 1-oxotrimethylene [$-CH_2-CH_2-CO-$].

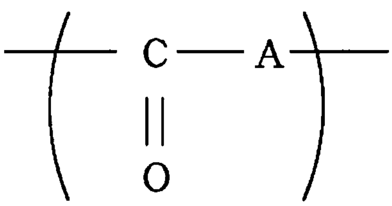

(II)

wherein A denotes a portion derived from an unsaturated compound polymerized through an unsaturated bond, and may be the same or different in each constitutional repeating unit.

While ketone groups or portions derived from an unsaturated compound in the polyketone may partly be bound together, preferably at least 90% by mass, more preferably at least 97% by mass, and most preferably 100% by mass of the portions derived from an unsaturated compound and the ketone groups are alternately linked.

The unsaturated compound of A in the general formula (II) is most preferably ethylene and may be another unsaturated hydrocarbon, such as propylene, butene, pentene, cyclopentene, hexene, cyclohexene, heptene, octene, nonene, decene, dodecene, styrene, acetylene, or allene, or a compound containing an unsaturated bond, such as methyl acrylate, methyl methacrylate, vinyl acetate, acrylamide, hydroxyethyl methacrylate, undecenoic acid, undecenol, 6-chlorohexene, N-vinylpyrrolidone, diethyl ester of sulnyl phosphonic acid, sodium styrenesulfonate, sodium allylsulfonate, vinylpyrrolidone, or vinyl chloride.

As the degree of polymerization of the polyketone, the intrinsic viscosity [η], as defined by the following equation (III), ranges preferably from 1 to 20 dl/g and more preferably from 3 to 8 dl/G.

$$[\eta] = \lim_{c \to 0} \frac{(T - t)}{(t \cdot c)} \qquad \text{(III)}$$

wherein t and T denote flow times of at least 98% pure hexafluoroisopropanol and a solution of polyketone in the hexafluoroisopropanol, respectively, passing through a viscosity tube at 25°C. c denotes the mass (g) of solute in 100 ml of the solution. When the polyketone has an intrinsic viscosity below 1 dl/g, the molecular weight of the polyketone is too small. Thus, it is difficult to produce a high-strength polyketone fiber cord. Furthermore, process troubles, such as fluffing and thread breakage, may occur frequently in spinning, drying, and drawing. On the other hand, the polyketone having an intrinsic viscosity above 20 dl/g requires many hours and high cost to synthesize. Furthermore, it is difficult to dissolve the polyketone uniformly. This may adversely affect spinning characteristics and physical properties.

Preferably, the PK fiber has a crystal structure having a degree of crystallinity in the range of 50% to 90% and a degree of crystalline orientation of at least 95%. The PK fiber having a degree of crystallinity below 50% not only has an insufficient fiber structure and therefore an insufficient strength, but also exhibits unstable shrinkage and low dimensional stability in heating. Accordingly, the degree of crystallinity ranges preferably from 50% to 90% and more preferably from 60% to 85%.

The fiber of the polyketone is produced preferably by (1) multistep hot drawing performed after spinning of undrawn yarn, in which the yarn is drawn at a particular temperature and draw ratio in the final drawing step in the multistep hot drawing or (2) hot drawing performed after spinning of undrawn yarn and subsequent quenching of the drawn yarn under a high tension. A desired filament suitable for the production of the polyketone fiber cord can be produced by the method (1) or (2).

A method for spinning undrawn yarn of the polyketone may be any conventional method. Specific examples of the method include wet spinning using an organic solvent, such as hexafluoroisopropanol or m-cresol, as described in Japanese Unexamined Patent Application Publication No. 2-112413 or No. 4-228613 or Japanese Unexamined Patent Application Publication (Translation of PCT Application) No. 4-505344 and wet spinning using an aqueous solution of a zinc salt, a calcium salt, thiocyanate, or ferrate, as described in International Publication WO99/18143 or WO00/09611 or Japanese Unexamined Patent Application Publication No. 2001-164422, No. 2004-218189, or No. 2004-285221. Among others, the wet spinning using an aqueous salt solution is preferred.

For example, in the wet spinning using an organic solvent, 0.25% to 20% by mass polyketone is dissolved in hexafluoroisopropanol or m-cresol and is extruded from a spinning nozzle to form a fiber. The fiber is then washed in a nonsolvent bath, such as a toluene, ethanol, isopropanol, n-hexane, isooctane, acetone, or methyl ethyl ketone bath, to remove the solvent, thus yielding undrawn polyketone yarn.

In the wet spinning using an aqueous solution, 2% to 30% by mass polyketone is dissolved in an aqueous solution of, for example, a zinc salt, a calcium salt, thiocyanate, or ferrate and is extruded at a temperature in the range of 50°C to 130°C from a spinning nozzle to a coagulation bath for gel spinning. After desalination, drying, and other processes, undrawn polyketone yarn can be obtained. The aqueous solution for dissolving the polyketone preferably contains zinc halide and a halogenated alkali metal salt or a halogenated alkaline earth metal salt. The coagulation bath may contain water, an aqueous metallic salt solution, or an organic solvent, such as acetone or methanol.

The resulting undrawn yarn is preferably drawn by hot drawing, in which the undrawn yarn is heated to a temperature higher than its glass transition temperature. While such drawing of the undrawn yarn may be performed in a single step in the method (2), it is preferably performed in multiple steps. The hot drawing may be performed by any method. For example, the undrawn yarn may be run on a heating roll or a heating plate. The hot drawing temperature preferably ranges from 110°C to the melting point of the polyketone. The total draw ratio is suitably at least ten.

When a polyketone fiber is produced by the method (1), the temperature in the final drawing step of the multistep hot drawing preferably ranges from 110°C to (the drawing temperature of the penultimate drawing step - 3°C). The draw ratio in the final drawing process preferably ranges from 1.01 to 1.5. When a polyketone fiber is produced by the method (2), the tension applied to a hot-drawn fiber preferably ranges from 0.5 to 4 cN/dtex. The cooling rate in the quenching

is preferably at least 30°C/s. The final temperature in the quenching is preferably not more than 50°C. The hot-drawn polyketone fiber may be quenched by any conventional method and preferably by using a roll. Because the polyketone fiber thus produced has a large residual elastic strain, the polyketone fiber is preferably subjected to a stress-relieving heat treatment to reduce its length after hot drawing. The temperature of the stress-relieving heat treatment preferably ranges from 50°C to 100°C. The relaxation ratio preferably ranges from 0.980 to 0.999.

It is desirable that, to make the most of high thermal shrinkage of the PK fiber cord, the processing temperature or the service temperature of the molded product is close to the temperature at which the maximum thermal shrinkage stress is obtained (maximum thermal shrinkage temperature). More specifically, because the processing temperature in an optional adhesive treatment, such as the RFL processing temperature or the vulcanization temperature, ranges from 100°C to 250°C, and because the temperature of the tire materials when they become hot owing to repeated use or high-speed rotation is as high as 100°C to 200°C, the maximum thermal shrinkage temperature ranges preferably from 100°C to 250°C and more preferably from 150°C to 240°C.

Coating rubber for covering a cord fabric according to the present invention may have any shape provided that the coating rubber covers the cord fabric. Representative examples of the coating rubber include films and sheets. When the coating rubber is a belt protection layer 7, the coating rubber may be shaped like a ribbon. The coating rubber may have any composition, including known rubber compositions.

A cord fabric according to the present invention is coated with a rubber composition by a known method, such as dipping, coating, or lamination.

## EXAMPLES

### Preparation example of PK fiber

A polyketone having an intrinsic viscosity of 5.3 was prepared from complete alternating copolymerization of ethylene and carbon monoxide by a routine procedure. The polyketone was added to an aqueous solution containing 65% by mass zinc chloride/10% by mass sodium chloride. The solution was stirred at 80°C for two hours, yielding a dope solution containing 8% by mass polyketone.

The dope solution was heated to 80°C and was passed through a 20 μm sintered filter. The dope solution was extruded from a spinning nozzle having 50 holes 0.10 mmϕ in diameter heated at 80°C through a 10 mm air gap into 18°C water containing 5% by mass zinc chloride at a discharge rate of 2.5 cc/min. The extrudate was drawn at 3.2 m/min to produce a coagulated filament.

The coagulated filament was washed in 2% by mass aqueous sulfuric acid solution at 25°C and then in water at 30°C, and was taken up as a coagulated yarn at 3.2 m/min. The coagulated yarn was impregnated with IRGANOX 1098 (Ciba Specialty Chemicals) and IRGANOX 1076 (Ciba Specialty Chemicals) at 0.05% by mass (with respect to polyketone) each. The coagulated yarn was dried at 240°C and was treated with a finishing agent to produce undrawn yarn.

The finishing agent has the following composition:

lauryl oleate/bisoxyethyl bisphenol A/polyether (propylene oxide/ethylene oxide = 35/65: molecular weight 20000)/10-mole polyethylene oxide adduct of oleyl ether/10-mole polyethylene oxide adduct of castor oil ether/sodium stearylsulfonate/sodium dioctylphosphate = 30/30/10/5/23/1/1 (% by mass).

The resulting undrawn yarn was drawn by five steps: 240°C (1st), 258°C (2nd), 268°C (3rd), 272°C (4th), and 200°C at a draw ratio of 1.08 (drawing tension 1.8 cN/dtex) (5th), and was taken up with a winder. The total draw ratio of the five-step drawn yarn from the undrawn yarn was 17.1. This fiber yarn had excellent physical properties: a strength of 15.6 cN/dtex, an elongation of 4.2%, and a modulus of elasticity of 347 cN/dtex. The fiber yarn also had high thermal shrinkage characteristics: a thermal shrinkage of 4.3% and a maximum thermal shrinkage stress of 0.92 cN/dtex in 150°C x 30 min dry-heat treatment. The PK fiber cord thus produced was used in the following examples. EXAMPLES 1-1 to 1-10 and COMPARATIVE EXAMPLES 1-1 to 1-5 Carcass cords having physical properties shown in Tables 1 to 3 and wefts shown in Tables 1 to 3 were used to manufacture sample tires (size: 225/45R17), which were subjected to a hydraulic strength test and uniformity measurement using a uniformity measurement machine. Breakage of the weft and disarrangement of carcass cords in tire manufacture were also evaluated. "G" means good, and "P" means poor. Tables 1 to 3 show the results.

[Table 1]

| | | Example 1-1 | Example 1-2 | Example 1-3 | Example 1-4 | Example 1-5 |
|---|---|---|---|---|---|---|
| Carcass cord | Material | 100% by mass polyketone fiber | 100% by mass polyketone fiber | 100% by mass polyketone fiber | 100% by mass polyketone fiber | 100% by mass polyketone fiber |
| | Fineness | 1670dtex/2 | 1670dtex/2 | 1670dtex/2 | 1670dtex/2 | 1670dtex/2 |
| | Maximum thermal shrinkage stress (cN/dtex) | 0.9 | 0.9 | 0.9 | 0.9 | 0.9 |
| | Number of embedded cords in the center (/50 mm) | 40 | 40 | 40 | 40 | 40 |
| Weft substantially orthogonal to carcass cord | Material | Cotton | Cotton | Rayon | Rayon | Polynosic |
| | Type | Spun yarn | Spun yarn | Multifilament | Multifilament | Spun yarn |
| | Fineness | 300dtex | 420dtex | 200dtex | 300dtex | 200dtex |
| | Tensile force (g) | 250 | 420 | 300 | 450 | 280 |
| | Elongation at break (%) | 5.5 | 7.5 | 7.5 | 8 | 8 |
| | Spacing between cords (mm) | 30 | 30 | 30 | 30 | 30 |
| Breakage of weft during manufacture | | None | None | None | None | None |
| Tire strength | | G | G | G | G | G |
| Disarrangement of carcass cords | | G | G | G | G | G |
| Tire uniformity | | G | G | G | G | G |

[Table 2]

| | | Example 1-6 | Example 1-7 | Example 1-8 | Example 1-9 | Example 1-10 |
|---|---|---|---|---|---|---|
| Carcass cord | Material | 100% by mass polyketone fiber | 100% by mass polyketone fiber | 100% by mass polyketone fiber | 100% by mass polyketone fiber | 100% by mass polyketone fiber |
| | Fineness | 1670dtex/2 | 1670dtex/2 | 1670dtex/2 | 1670dtex/2 | 1670dtex/2 |
| | Maximum thermal shrinkage stress (cN/dtex) | 0.9 | 0.9 | 0.9 | 0.9 | 0.9 |
| | Number of embedded cords in the center (/50 mm) | 40 | 40 | 40 | 40 | 40 |
| Weft substantially orthogonal to carcass cord | Material | Polynosic | Polynosic | Lyocell | Lyocell | Lyocell |
| | Type | Spun yarn | Spun yarn | Spun yarn | Spun yarn | Spun yarn |
| | Fineness | 300dtex | 420dtex | 200dtex | 300dtex | 420dtex |
| | Tensile force (g) | 420 | 600 | 520 | 800 | 1120 |
| | Elongation at break (%) | 8 | 8.5 | 10 | 10 | 11 |
| | Spacing between cords (mm) | 30 | 30 | 30 | 30 | 30 |
| Breakage of weft during manufacture | | None | None | None | None | None |
| Tire strength | | G | G | G | G | G |
| Disarrangement of carcass cords | | G | G | G | G | G |
| Tire uniformity | | G | G | G | G | G |

[Table 3]

| | | Comparative Example 1-1 | Comparative Example 1-2 | Comparative Example 1-3 | Comparative Example 1-4 | Comparative Example 1-5 |
|---|---|---|---|---|---|---|
| Carcass cord | Material | 100% by mass polyketone fiber | 100% by mass polyketone fiber | 100% by mass polyketone fiber | 100% by mass aramid fiber | 100% by mass aramid fiber |
| | Fineness | 1670dtex/2 | 1670dtex/2 | 1670dtex/2 | 1670dtex/2 | 1670dtex/2 |
| | Maximum thermal shrinkage stress (cN/dtex) | 0.9 | 0.9 | 0.9 | 0 | 0 |
| | Number of embedded cords in the center (/50 mm) | 40 | 40 | 40 | 40 | 40 |
| Weft substantially orthogonal to carcass cord | Material | Cotton | PET | Polynosic | Polynosic | Polynosic |
| | Type | Spun yarn | Monofilament | Spun yarn | Spun yarn | Spun yarn |
| | Fineness | 60dtex | 420dtex | 1670dtex | 200dtex | 300dtex |
| | Tensile force (g) | 50 | 1200 | 2200 | 280 | 420 |
| | Elongation at break (%) | 5.5 | 35 | 9 | 8 | 8 |
| | Spacing between cords (mm) | 30 | 30 | 30 | 30 | 30 |
| Breakage of weft during manufacture | | Observed | None | None | None | None |
| Tire strength | | G | G | G | G | G |
| Disarrangement of carcass cords | | G | P | P | P | P |
| Tire uniformity | | G | P | P | P | P |

EXAMPLES 2-1 to 2-10, COMPARATIVE EXAMPLES 2-1 to 2-3, and CONVENTIONAL EXAMPLE 2-1

Sample tires (size: 195/55R15) including a belt layer composed of two belt plies (a first belt ply formed of steel cords and a second belt ply formed of second belt cords shown in Tables 4 to 6) reinforced with a single belt protection layer (6,6-nylon, 1400 dtex/2) were manufactured. A circumference growth test under internal pressure and uniformity measurement using a uniformity measurement machine were performed. Breakage of the weft during manufacture and disarrangement of second belt cords were also evaluated. "E" means excellent, "G" means good, and "P" means poor. Tables 4 to 6 show the results.

[Table 4]

| | | Example 2-1 | Example 2-2 | Example 2-3 | Example 2-4 | Example 2-5 |
|---|---|---|---|---|---|---|
| Second belt cord | Material | 100% by mass polyketone fiber | 100% by mass polyketone fiber | 100% by mass polyketone fiber | 100% by mass polyketone fiber | 100% by mass polyketone fiber |
| | Fineness | 1670dtex/2 | 1670dtex/2 | 1670dtex/2 | 1670dtex/2 | 1670dtex/2 |
| | Maximum thermal shrinkage stress (cN/dtex) | 0.91 | 0.91 | 0.91 | 0.91 | 0.91 |
| | Number of embedded cords in the center (/50 mm) | 40 | 40 | 40 | 40 | 40 |
| Weft substantially orthogonal to second belt cord | Material | Cotton | Cotton | Cotton | Rayon | Rayon |
| | Type | Spun yarn | Spun yarn | Spun yarn | Multifilament | Multifilament |
| | Fineness | 420dtex | 600dtex | 1000dtex | 200dtex | 420dtex |
| | Tensile force (g) | 250 | 420 | 720 | 300 | 450 |
| | Elongation at break (%) | 5.5 | 7.5 | 8.0 | 7.5 | 8 |
| | Spacing between cords (mm) | 30 | 30 | 30 | 30 | 30 |
| Breakage of weft during manufacture | | None | None | None | None | None |
| Growth under internal pressure | | E | E | E | E | E |
| Disarrangement of second belt cords | | G | G | G | G | G |
| Tire uniformity | | G | G | G | G | G |

[Table 5]

| | | Example 2-6 | Example 2-7 | Example 2-8 | Example 2-9 | Example 2-10 |
|---|---|---|---|---|---|---|
| Second belt cord | Material | 100% by mass polyketone fiber | 100% by mass polyketone fiber | 100% by mass polyketone fiber | 100% by mass polyketone fiber | 100% by mass polyketone fiber |
| | Fineness | 1670dtex/3 | 1670dtex/3 | 1670dtex/3 | 1670dtex/3 | 1670dtex/3 |
| | Maximum thermal shrinkage stress (cN/dtex) | 0.92 | 0.92 | 0.92 | 0.92 | 0.92 |
| | Number of embedded cords in the center (/50 mm) | 30 | 30 | 30 | 30 | 30 |
| Weft substantially orthogonal to second belt cord | Material | Polynosic | Polynosic | Lyocell | Nylon | PET |
| | Type | Spun yarn | Spun yarn | Spun yarn | Monofilament | Monofilament |
| | Fineness | 300dtex | 420dtex | 420dtex | 420dtex | 420dtex |
| | Tensile force (g) | 420 | 600 | 600 | 1350 | 1200 |
| | Elongation at break (%) | 8 | 8.5 | 8.5 | 27 | 20 |
| | Spacing between cords (mm) | 25 | 25 | 25 | 25 | 25 |
| Breakage of weft during manufacture | | None | None | None | None | None |
| Growth under internal pressure | | E | E | E | E | E |
| Disarrangement of second belt cords | | G | G | G | G | G |
| Tire uniformity | | G | G | G | G | G |

[Table 6]

| | | Comparative Example 2-1 | Comparative Example 2-2 | Comparative Example 2-3 | Conventional Example 2-1 |
|---|---|---|---|---|---|
| Second belt cord | Material | 100% by mass polyketone fiber | 100% by mass polyketone fiber | 44% by mass polyketone fiber + 56% by mass 66-nylon | Steel |
| | Fineness | 1670dtex/3 | 1670dtex/2 | PK1100dtex /66NY1400dtex | 1×3×0.28 |
| | Maximum thermal shrinkage stress(cN/dtex) | 0.9 | 0.9 | 0.36 | - |
| | Number of embedded cords in the center (/50 mm) | 40 | 40 | 40 | 30 |
| Weft substantially orthogonal to second belt cord | Material | Cotton | Cotton | Cotton | None |
| | Type | Spun yarn | Spun yarn | Spun yarn | 30 |
| | Fineness | 100dtex | 1180dtex | 420dtex | |
| | Tensile force(g) | 70 | 900 | 250 | |
| | Elongation at break(%) | 5 | 5 | 5.5 | |
| | Spacing between cords(mm) | 30 | 30 | 30 | |
| Breakage of weft during manufacture | | Observed | None | None | - |
| Growth under internal pressure | | E | E | P | G |
| Disarrangement of second belt cords | | G | P | G | G |
| Tire uniformity | | G | P | G | G |

EXAMPLES 3-1 to 3-10, COMPARATIVE EXAMPLES 3-1 to 3-3, and CONVENTIONAL EXAMPLES 3-1 and 3-2

Sample tires (size: 225/45R17) reinforced with a belt protection layer (6,6-nylon, 1400 dtex/2) composed of a single cord fabric layer shown in Tables 7 to 9 were manufactured. A circumference growth test under internal pressure and uniformity measurement using a uniformity measurement machine were performed. Breakage of the weft during manufacture and disarrangement of fiber cords in the belt protection layer were also evaluated. "E" means excellent, "G" means good, and "P" means poor. Tables 4 to 6 show the results.

[Table 7]

| | | Example 3-1 | Example 3-2 | Example 3-3 | Example 3-4 | Example 3-5 |
|---|---|---|---|---|---|---|
| Cords in belt protection layer | Material | 100% by mass polyketone fiber | 100% by mass polyketone fiber | 100% by mass polyketone fiber | 100% by mass polyketone fiber | 100% by mass polyketone fiber |
| | Fineness | 1670dtex/2 | 1670dtex/2 | 1100dtex/2 | 1670dtex/2 | 1100dtex/2 |
| | Maximum thermal shrinkage stress(cN/dtex) | 0.9 | 0.9 | 0.9 | 0.9 | 0.9 |
| | Number of embedded cords in the center (/50 mm) | 50 | 40 | 50 | 40 | 50 |
| Weft substantially orthogonal to cords in belt protection layer | Material | Cotton | Cotton | Rayon | Rayon | Polynosic |
| | Type | Spun yarn | Spun yarn | Multifilament | Multifilament | Spun yarn |
| | Fineness | 300dtex | 420dtex | 200dtex | 300dtex | 200dtex |
| | Tensile force(g) | 250 | 420 | 300 | 450 | 280 |
| | Elongation at break(%) | 5.5 | 7.5 | 7.5 | 8 | 8 |
| | Spacing between cords(mm) | 30 | 30 | 30 | 30 | 30 |
| Breakage of weft during manufacture | | None | None | None | None | None |
| Growth under internal pressure | | E | E | E | E | E |
| Disarrangement of cords in belt protection layer | | G | G | G | G | G |
| Tire uniformity | | G | G | G | G | G |

[Table 8]

| | | Example 3-6 | Example 3-7 | Example 3-8 | Example 3-9 | Example 3-10 |
|---|---|---|---|---|---|---|
| Cords in belt protection layer | Material | 100% by mass polyketone fiber | 100% by mass polyketone fiber | 100% by mass polyketone fiber | 100% by mass polyketone fiber | 100% by mass polyketone fiber |
| | Fineness | 1670dtex/2 | 1670dtex/2 | 1100dtex/2 | 1670dtex/2 | 1670dtex/2 |
| | Maximum thermal shrinkage stress (cN/dtex) | 0.9 | 0.9 | 0.9 | 0.9 | 0.9 |
| | Number of embedded cords in the center (/50 mm) | 40 | 40 | 50 | 40 | 40 |
| Weft substantially orthogonal to cords in belt protection layer | Material | Polynosic | Polynosic | Lyocell | Lyocell | Lyocell |
| | Type | Spun yarn | Spun yarn | Spun yarn | Spun yarn | Spun yarn |
| | Fineness | 300dtex | 420dtex | 200dtex | 300dtex | 420dtex |
| | Tensile force (g) | 420 | 600 | 520 | 800 | 1120 |
| | Elongation at break (%) | 8 | 8.5 | 10 | 10 | 11 |
| | Spacing between cords (mm) | 30 | 30 | 30 | 30 | 30 |
| Breakage of weft during manufacture | | None | None | None | None | None |
| Growth under internal pressure | | E | E | E | E | E |
| Disarrangement of cords in belt protection layer | | G | G | G | G | G |
| Tire uniformity | | G | G | G | G | G |

[Table 9]

| | | Comparative Example 3-1 | Comparative Example 3-2 | Comparative Example 3-3 | Conventional Example 3-1 | Conventional Example 3-2 |
|---|---|---|---|---|---|---|
| Cords in belt protection layer | Material | 100% by mass polyketone fiber | 100% by mass polyketone fiber | 100% by mass polyketone fiber | 100% by mass 66-nylon | 100% by mass 66-nylon |
| | Fineness | 1670dtex/2 | 1670dtex/2 | 1670dtex/2 | 840dtex/2 | 1400dtex/2 |
| | Maximum thermal shrinkage stress (cN/dtex) | 0.9 | 0.9 | 0.9 | 0.1 | 0.1 |
| | Number of embedded cords in the center (/50 mm) | 40 | 40 | 40 | 50 | 40 |
| Weft substantially orthogonal to cords in belt protection layer | Material | Cotton | PET | Polynosic | Polynosic | Polynosic |
| | Type | Spun yarn | Monofilament | Spun yarn | Spun yarn | Spun yarn |
| | Fineness | 60dtex | 420dtex | 1670dtex | 200dtex | 300dtex |
| | Tensile force (g) | 50 | 1200 | 2200 | 280 | 420 |
| | Elongation at break (%) | 5.5 | 35 | 9 | 8 | 8 |
| | Spacing between cords (mm) | 30 | 30 | 30 | 30 | 30 |
| Breakage of weft during manufacture | | Observed | None | None | None | None |
| Growth under internal pressure | | E | E | E | G | G |
| Disarrangement of cords in belt protection layer | | G | P | P | G | G |
| Tire uniformity | | G | P | P | G | G |

**Claims**

1. A pneumatic tire, comprising: a tread; a pair of sidewalls extending radially inwardly from both ends of the tread; a pair of beads disposed at inward ends of the sidewalls; a carcass layer formed of at least one carcass ply toroidally extending between a pair of bead cores disposed in the beads; and a belt layer formed of at least one belt ply disposed radially outwardly from the carcass at the crown of the carcass,
wherein at least one carcass ply cord of the carcass layer contains at least 50% by mass polyketone fiber and has a maximum thermal shrinkage stress in the range of 0.1 to 1.8 cN/dtex, weft cords within the tire substantially orthogonal to the carcass ply cord have a fineness in the range of 60 to 600 dtex, a tensile force in the range of 100 to 2000 g, and an elongation at break in the range of 3% to 30%, and the distance between the weft cords substantially parallel to each other ranges from 5 to 50 mm.

2. A pneumatic tire, comprising: a tread; a pair of sidewalls extending radially inwardly from both ends of the tread; a pair of beads disposed at inward ends of the sidewalls; a carcass layer formed of at least one carcass ply toroidally extending between a pair of bead cores disposed in the beads; and a belt layer formed of at least one belt ply disposed radially outwardly from the carcass at the crown of the carcass,
wherein at least one belt ply cord of the belt layer contains at least 50% by mass polyketone fiber and has a maximum thermal shrinkage stress in the range of 0.1 to 1.8 cN/dtex, weft cords within the tire substantially orthogonal to the belt ply cord have a fineness in the range of 200 to 1000 dtex, a tensile force in the range of 200 to 3000 g, and an elongation at break in the range of 3% to 30%, and the distance between the weft cords substantially parallel to each other ranges from 5 to 50 mm.

3. A pneumatic tire, comprising: a tread; a pair of sidewalls extending radially inwardly from both ends of the tread; a pair of beads disposed at inward ends of the sidewalls; a carcass layer formed of at least one carcass ply toroidally extending between a pair of bead cores disposed in the beads; a belt layer formed of at least one belt ply disposed radially outwardly from the carcass at the crown of the carcass; and at least one belt protection layer disposed radially outwardly from the belt layer,
wherein a fiber cord that forms the belt protection layer contains at least 50% by mass polyketone fiber and has a maximum thermal shrinkage stress in the range of 0.1 to 1.8 cN/dtex, weft cords within the tire substantially orthogonal to the fiber cord in the belt protection layer have a fineness in the range of 60 to 600 dtex, a tensile force in the range of 100 to 1200 g, and an elongation at break in the range of 3% to 20%, and the distance between the weft cords substantially parallel to each other ranges from 5 to 50 mm.

4. The pneumatic tire according to any one of Claims 1 to 3, wherein the polyketone fiber has a tensile strength of at least 10 cN/dtex, a modulus of elasticity of at least 200 cN/dtex, and a thermal shrinkage in the range of 1% to 5% in a 150°C x 30 min dry-heat treatment.

5. The pneumatic tire according to any one of Claims 1 to 4, wherein the weft cords are formed of multifilament yarn, monofilament yarn, or spun yarn, or a mixture thereof.

6. The pneumatic tire according to any one of Claims 1 to 5, wherein the weft cords are formed of Polynosic, rayon, cotton, polyester, nylon, lyocell, or vinylon.

Fig.1

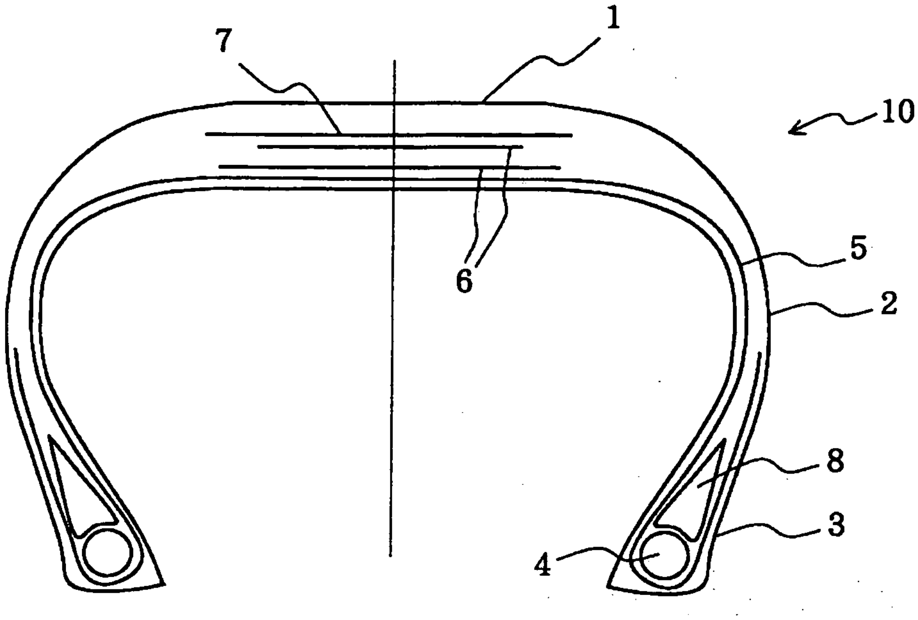

**INTERNATIONAL SEARCH REPORT**

International application No.
PCT/JP2007/057430

A. CLASSIFICATION OF SUBJECT MATTER
*B60C9/04*(2006.01)i, *B60C9/00*(2006.01)i, *B60C9/20*(2006.01)i, *B60C9/22*(2006.01)i

According to International Patent Classification (IPC) or to both national classification and IPC

B. FIELDS SEARCHED

Minimum documentation searched (classification system followed by classification symbols)
B60C9/00, B60C9/04, B60C9/20, B60C9/22, D03D1/00, D03D9/00, D03D15/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-049339 A (Asahi Kasei Corp.), 21 February, 2003 (21.02.03), Claims; Par. Nos. [0001], [0006] to [0016], [0019] to [0031]; example 1; comparative example 1 (Family: none) | 1-6 |
| Y | JP 2004-308024 A (Bridgestone Corp.), 04 November, 2004 (04.11.04), Claims; Par. No. [0024] (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 June, 2007 (29.06.07) | 10 July, 2007 (10.07.07) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2007/057430

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-334807 A (Sumitomo Rubber Industries, Ltd.), 04 December, 2001 (04.12.01), Claims; Par. Nos. [0014] to [0028] & EP 1260385 A1 & US 2002/0017351 A1 & JP 2001-334811 A | 1,2,4-6 |
| Y | JP 2001-341505 A (Toyo Tire and Rubber Co., Ltd.), 11 December, 2001 (11.12.01), Claims; Par. Nos. [0010] to [0017] (Family: none) | 2,4-6 |
| Y | WO 2002/068738 A1 (Asahi Kasei Corp.), 06 September, 2002 (06.09.02), Claims; page 3, lines 5 to 9; page 5, line 9 to page 9, line 4; page 10, line 17 to page 25, line 21 & EP 1371759 A1 & US 2003/0026981 A1 & TW 591138 B | 1-6 |
| Y | JP 2002-339275 A (Asahi Kasei Corp.), 27 November, 2002 (27.11.02), Claims; Par. Nos. [0001], [0011] to [0035] (Family: none) | 1-6 |
| Y | JP 2003-013326 A (Asahi Kasei Corp.), 15 January, 2003 (15.01.03), Claims; Par. Nos. [0001], [0008] to [0049] (Family: none) | 1-6 |
| Y | JP 2001-271249 A (Bridgestone Corp.), 02 October, 2001 (02.10.01), Claims; Par. Nos. [0001], [0007]; table 1 (Family: none) | 1-6 |
| Y | JP 63-038006 A (The Ohtsu Tire & Rubber Co., Ltd.), 18 February, 1988 (18.02.88), Claims; page 2, lines 11 to 18; examples; comparative examples (Family: none) | 1-6 |
| Y | JP 48-009392 B1 (The Goodyear Tire & Rubber Co.), 24 August, 1973 (24.08.73), Column 2, lines 25 to 31; column 3, line 39 to column 4, line 3; tables & US 3534782 A & DE 1936927 A1 & FR 2020519 A5 | 1-6 |

Form PCT/ISA/210 (continuation of second sheet) (April 2005)

**INTERNATIONAL SEARCH REPORT**

International application No.
PCT/JP2007/057430

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2003/011615 A1 (Sumitomo Rubber Industries, Ltd.), 13 February, 2003 (13.02.03), Claims; page 9, lines 8 to 17; examples & EP 1413460 A1 & US 2004/0011449 A1 & CN 1466524 A & TW 539629 B | 1-6 |
| Y | JP 56-002203 A (Unitika Ltd.), 10 January, 1981 (10.01.81), Claims; page 1, lower left column, line 18 to lower right column, line 1 (Family: none) | 1-6 |
| Y | JP 6-200443 A (Bridgestone Corp.), 19 July, 1994 (19.07.94), Claims; Par. No. [0019]; table 1 (Family: none) | 1-6 |
| P,A | WO 2006/080253 A1 (Bridgestone Corp.), 03 August, 2006 (03.08.06), Full text (Family: none) | 1,4-6 |
| P,A | JP 2006-256600 A (Bridgestone Corp.), 28 September, 2006 (28.09.06), Full text (Family: none) | 2,4-6 |
| P,A | WO 2006/077978 A1 (Bridgestone Corp.), 27 July, 2006 (27.07.06), Full text (Family: none) | 3-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 1124617 A
- JP 2112413 A
- JP 4505344 PCT
- JP 4228613 A
- JP 7508317 PCT
- JP 8507328 PCT
- US 5955019 A
- WO 9918143 A
- WO 0009611 A
- JP 9324377 A
- JP 9329198 A
- JP 11334313 A
- JP 11336957 A
- JP 2000142024 A
- JP 2000142025 A
- JP 2000190705 A
- JP 2000264012 A
- JP 2001164422 A
- JP 2004218189 A
- JP 2004285221 A


### Non-patent literature cited in the description


- Kogyo Zairyo. December 1997, 5